# EUROPEAN PATENT APPLICATION

(11) **EP 0 624 415 A1**
(43) Date of publication of application: **17.11.1994**
(21) Application number: 94850032.7
(22) Date of filing: 28.02.1994
(51) Int. Cl.: B23C 5/00, B23C 5/22, B23C 5/24

(54) **Milling cutter body**

(30) Priority: 18.03.1993 SE 9300889
(71) Applicant: SANDVIK AKTIEBOLAG, S-811 81 Sandviken 1 (SE)
(72) Inventor: Hessman, Ingemar, S-811 52 Sandviken (SE); Almersand, Ake, S-810 22 Arsunda (SE)

(57) **Abstract**

A milling cutter tool for chip-breaking machining comprises a rotatable milling cutter body (1) and a plurality of cassettes (4) with cutting inserts, which cassettes are fixed in the cutter body by fastening screws (10). An axial adjustment of the cassettes and the cutting edges can be made with eccenter taps (11). In order to facilitate the manufacturing of the chip pockets (8), these are made rotation-symmetrically, preferrably by turning.

## Description

The present invention relates to a milling cutter body for chip-breaking machining and a process for the manufacturing of said body.

A typical milling cutter tool comprises a cutter body that can be fixed at the end of a driving rotating axle and a plurality of cutting edges which are carried by the milling cutter body on a certain radial distance from the axis of rotation on that side of the body that is distanced from the driving axle, so that when the body is rotated the cutting edges describe a circle around the axial central axis of rotation. All parts of the milling cutter tool are situated axially and radially behind the cutting edges so that these have an unobstructed access to the workpiece. Since the cutting edges are relatively short, each of them performs a relatively short cutting operation, wherefore the tool is used with a certain feed, the direction of this feed being parallel to the machined surface.

The cutting edges are constituted by one or several edges on cutting inserts which can be made of coated or non-coated cemented carbide, ceramics or any other hard material. These cutting inserts are located on the top surfaces of cassettes which are fixed in grooves or recesses in the circular peripheric surface of the cutter body. In order to make room and enhance an unobstructed and even chip conveyance, the interspaces or gaps in the cutter body between the cassettes are usually provided with chip clearance recesses or chip pockets, whereby the chip pocket is situated in front of the pertaining cutting edge in the direction of rotation. At the production of the cutter body, these chip pockets are formed by milling or grinding. Occasionally, the chip pocket, or a part thereof, can be formed in the cassette.

Thus, in US-A-5 114 282 a milling cutter body is disclosed, in which each chip pocket has been milled out individually. This means equally many milling operations as there are chip pockets, i.e., about ten or more. This is both time and energy consuming.

In EP-B-65 496 and EP-B-126 432 milling cutters are disclosed in which the chip pockets are formed by recesses or vaulted parts in the wedges for fixing the cutting inserts. This requires many separate fastening parts and also the inconvenience of having to produce many small parts with a complicated geometrical form.

A first object of the present invention is thus to guarantee a satisfactory chip conveyance without the necessity of time- and energy-consuming chip clearance constructions.

Another object of the present invention is to guarantee a satisfactory chip conveyance with a minimum of separate construction parts.

These and other objects have been attained in a surprisingly simple way by forming the chip clearance recesses with a rotation-symmetrical form around the rotation axis, preferrably by turning.

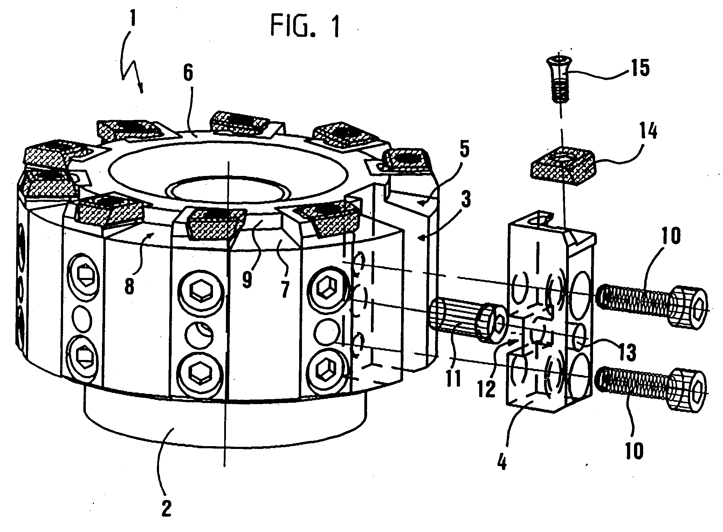

With reference to the accompanying drawing, a preferred embodiment of the invention will now be further described, in a non-limiting way. Said drawing is named FIG. 1 and shows a perspective view of the milling cutter body according to the invention, whereby one cassette is shown in an exploded view.

In figure 1 the cutter body is generally designated by 1. It has a basically cylindrical shape. Its diameter can lie between 50 and 700 mm, suitably between 70 and 500 mm and in particular between 80 and 400 mm. On the lower side of the cutter body there is an integrated, cylindrical fixation part 2 for fastening the cutter body onto a rotating driving means. In the cutter body are provided recesses or grooves 3 for carrying the cassettes 4. The upper, peripherical edge of the cutter body has been formed with a shelf 5, suitably by turning. This shelf is regularly interrupted by the cassette grooves 3. Preferrably, the depth of the grooves 3 in radial direction is larger than the radial width of the shelf 5. When mounted, the cassettes reach about the same height as the upper side 6 of the milling cutter, which means that the cassettes extend higher than the radially extending surface 7 of the shelf 5. By this construction a chip pocket or space 8 is created which is delimited in three directions, viz. by the shelf's side surface 9 and the two adjacent surfaces of two cassettes, which protrude above the shelf's radially extending surface 7. The radially outer side of the chip space is open in order to enable chip conveyance. In order to further enhance the chip conveyance, the radially extending surface 7 can slope slightly downwards radially outwards, away from surface 6. The angle between surface 7 and a radial plane that is perpendicular to the axis of rotation, can suitably lie between 2 and 35°, preferrably between 5 and 20° and in particular between 7 and 15°. In order to give enough place to a formed chip, the shelf's 5 radial width should be at least equally large as the length of the chip-forming cutting edge, and preferrably 20 to 50% larger than this cutting edge. In order to make possible a sufficient radius of curvature of the formed chip, the side surface 9 should have a width of between 2 and 15 mm, preferrably between 2,5 and 10 mm, depending upon the cutting depth and the thickness of the used cutting insert.

The constructive configuration of the cassettes and the cutting inserts do not constitute any critical features of the present invention, provided that the cassettes protrude sufficiently far above the shelf's surface 7 to delimit two sides of the chip space 8. As mentioned above, in practice this means that the top surfaces of the cassettes are substantially levelled with the upper side 6 of the milling cutter. Further, it means that the radially outer surface of the cassette should lie substantially at the same radial distance from the center of rotation as the cylindrical envelope surface of the cutter body.

According to the embodiment in the drawing, the cassette grooves 3 are through, from the upper side to the lower side of the milling cutter body and, thus, they can be milled or reamed. However, they do not have to be through but can terminate before they reach the lower side. Notwithstanding this, of production-technical reasons, through grooves are preferred. The number of grooves varies depending upon the diameter of the milling cutter and how close a pitch is desired. The illustrated embodiment relates to a milling cutter body with an outer diameter of 103 mm and ten cassette grooves. The cassettes 4 are fixed in the grooves 3 by one to four, preferrably two, fastening screws 10. Each screw is provided with a hexagonal hole in its head, for tightening with a corresponding key. In the cassette through holes are foreseen for leading in the fastening screws. Further, said holes can be provided with a part of enlarged diameter, in order to accomodate the head of the respective screw. The holes are not completely circular but somewhat elongated, with a larger extension in the direction of the cassette than in a direction perpendicular to the direction of the cassette. The purpose of this is of course to enable a certain axial displacement of the cassette, by turning an eccenter tap 11, whose eccentric head fits into a groove 12 in the cassette. The width of this groove corresponds to the head diameter of the eccenter tap. Furthermore, in the cassette is provided a through hole 13, which opens into the groove 12, opposite to the head of the eccenter tap. In order to avoid that the eccenter tap falls out through the hole 13, the diameter of the latter is smaller than that of the head of the eccenter tap. In this way, the eccenter tap is efficiently and safely kept in the corresponding orifice in the milling cutter head, at the same time as it is easily accessible with a suitable key or driver means via the hole 13.

On the top side of the cassette there is a cutting insert pocket for locating a cutting insert 14, which is fastened in the insert pocket by means of a suitable screw 15. The insert pocket is suitably formed with three abutment surfaces in order to attain a statically well defined insert positioning.

As mentioned above, the geometry of the cutting insert 14 is not an essential feature of the present invention. However, in relation with the present invention it should be pointed out that at least a part of the clearance surfaces of the cutting inserts may constitute a part of the three delimiting surfaces of a chip pocket.

As can be understood from the above, a milling cutter has been conceived with efficient and easily produced chip pockets. By the fact that all chip pockets are formed in one single machining operation, the production costs have been considerably reduced in comparison with known chip pockets. As also the other surfaces of the milling cutter body can be produced by turning, this further turning operation does not constitute any considerable extra effort, since the blank for the cutter body is already mounted in the lathe spindle. By this construction, one has avoided the necessity of forming every chip pocket individually. In view of the frequently occurring high number of chip pockets, particularly at large cutter body diameters, the savings in time and energy are very important.

In agreement of what has been described above, it is most advantageous in a production-technical point of view, to produce the chip pockets by turning. However, also other machining methods are feasible, by which rotation-symmetrical chip pockets can be produced. Thus, other feasible manufacturing operations are grinding, broaching and circular interpolation.

## Claims

1. Milling cutter body of cylindrical basic shape comprising an upper side, a lower side and a cylindrical envelope surface, whereby in the envelope surface are provided a plurality of recesses or grooves (3) for carrying cassettes (4) with cutting inserts, and chip pockets between said cassettes, **characterized** in that the chip pockets (8) are substantially rotation-symmetrically formed.

2. Milling cutter body according to claim 1, characterized in that the chip pockets are made by turning.

3. Milling cutter body according to claim 2, characterized in that the chip pockets are basically constituted by a shelf (5), which has been turned around the edge of the upper side (6) of the cutter body.

4. Milling cutter body according to claim 1, 2 or 3, characterized in that the radial depth of the cassette grooves (3) is larger than the width of the shelf (5).

5. Milling cutter body according to any of the previous claims, characterized in that each chip pocket (8) is delimited by two adjacent cassettes and a side surface (9) of the shelf (5).

6. Milling cutter body according to any of the previous claims, characterized in that the cassettes in the grooves protrude to a level above the bottom surface (7) of the shelf (5).

7. Milling cutter body according to any of the previous claims, characterized in that the top surface of the cassettes is located substantially on the same level as the upper surface (6) of the cutter body.

8. Milling cutter body according to any of the previous claims, characterized in that the side of the cassette that faces radially outwards is located in substantially the same rotational plane as the cylindrical envelope surface of the cutter body.

9. Milling cutter body according to any of the previous claims, characterized in that radially outwards, the bottom surface (7) of the shelf (5) is inclined downwards, away from the upper surface (6) of the cutter body.

10. Process of making a milling cutter body of cylindrical basic shape, which comprises an upper surface (6), a lower surface and a cylindrical envelope surface, whereby the envelope surface is provided with a plurality of recesses or grooves (3) for carrying cassettes with cutting inserts, and chip pockets between adjacent cassettes, characterized in that the chip pockets (8) are formed rotation-symmetrically around the rotation axis of the cutter body.

11. Process according to claim 10, characterized in that the chip pockets are made by turning.
